# EUROPÄISCHE PATENTSCHRIFT

(11) **EP 2 950 742 B1**
(45) Veröffentlichungstag und Bekanntmachung des Hinweises auf die Patenterteilung: **12.02.2020**
(21) Anmeldenummer: 14701102.7
(22) Anmeldetag: 22.01.2014
(51) Int. Cl.: A61C 7/08, A61C 7/00, A61C 7/14, A61C 7/36

(54) **VERFAHREN ZUM HERSTELLEN VON HERAUSNEHMBAREN ZAHNMEDIZINISCHEN APPARATUREN**
METHOD FOR PRODUCING REMOVABLE DENTAL APPLIANCES
PROCÉDÉ DE PRODUCTION D'APPAREILS MÉDICO-DENTAIRES AMOVIBLES

(30) Priorität: 30.01.2013 DE 102013201507
(43) Veröffentlichungstag der Anmeldung: 09.12.2015
(73) Patentinhaber: CA DIGITAL GmbH, 40822 Mettmann (DE)
(72) Erfinder: AICHINGER, Florian, 80337 München (DE); HOFMANN, Michael, 92318 Neumarkt (DE)
(74) Vertreter: Pellengahr, Maximilian Rudolf
(86) Internationale Anmeldenummer: PCT/EP2014/051232
(87) Internationale Veröffentlichungsnummer: WO 2014/118056

(56) Entgegenhaltungen:
- US-A1- 2006 257 821
- US-A1- 2008 233 530

## Beschreibung

Die Erfindung betrifft ein Verfahren zum Herstellen einer eine Mehrzahl von Komponenten umfassenden, herausnehmbaren zahnmedizinischen Apparatur auf Grundlage eines vorgegebenen Konstruktionsplans für die Apparatur.

In der Zahnmedizin gibt es eine Vielzahl von Apparaturen, welche im Mund des Patienten zum Einsatz kommen und dazu bestimmt sind, einen aufrechterhaltenden oder verändernden Einfluss auf die Zahnstellung zu nehmen. Dabei unterscheidet man herausnehmbare und nicht herausnehmbare Apparaturen. Zu den nicht herausnehmbaren Apparturen gehören beispielsweise fest installierte Zahnspangen mit Brackets, die auf den Zähnen befestigt, beispielsweise festgeklebt, werden und mit einem von den Brackets gehaltenen Drahtbogen, der die für die gewünschte Korrekturbewegung erforderliche Stellkräfte erzeugt. Daneben werden aber auch herausnehmbare Spangen verwendet, d.h. Spangen, die mit den Zähnen nicht dauerhaft verbunden sind, sondern, beispielsweise zu Reinigungszwecken, von den Zähnen gelöst und aus dem Mund herausgenommen und später wieder in den Mund eingeführt und auf die Zähne aufgesetzt werden können. Derartige herausnehmbare Spangen werden beispielsweise lediglich nachts getragen, um eine in einer Korrekturbehandlung erreichte korrigierte Zahnstellung zu bewahren. Aber auch Korrekturbehandlungen können mittels derartiger herausnehmbarer Zahnspangen durchgeführt werden.

Herkömmlich wird zur Herstellung einer derartigen herausnehmbaren zahnmedizinischen Apparatur wie folgt vorgegangen:
Zunächst wird die Ist-Stellung der Zähne mit Hilfe eines Abdrucks erfasst. Ausgehend von diesem Abdruck wird dann, beispielsweise durch Ausgießen mit Gips, ein Echtmodell erstellt. Der behandelnde Arzt entscheidet dann, aus welchen Komponenten die herausnehmbare Apparatur zusammengesetzt sein soll, d.h. er legt den Konstruktionsplan für die Apparatur fest.

Diese vom Zahnarzt dabei ausgewählten Komponenten können sowohl passive Komponenten sein, die die Zähne lediglich in den jeweiligen Ist-Stellungen halten, als auch aktive Komponenten, die dazu bestimmt sind, die Zähne aus den jeweiligen Ist-Stellungen heraus in eine gewünschte Soll-Stellung zu bewegen. Schließlich kann die Apparatur auch noch wenigstens eine weitere Komponente aufweisen, die lediglich der Verbindung der anderen Komponenten dient. Als Beispiele für passive Komponenten seien hier Adamsklammern, Dreiecksklammern, Ösenklammern, Knopfanker und Labialbogen genannt, und als Beispiele für aktive Komponenten Protrusionsfedern, Bukkalfedern, Dehnschrauben und Federbolzenschrauben. Diese Aufzählungen sind als nicht abschließend anzusehen, und es versteht sich, dass Fachleute sofort weitere Beispiele für derartige aktive und passive Komponenten nennen können. All diese Komponenten sind entweder als vorgefertigte Komponenten auf dem Markt erhältlich oder können als Einzelanfertigungen hergestellt werden. Zudem sei betont, dass die vorstehend genannten Komponenten auch im Zusammenhang mit der vorliegenden Erfindung zum Einsatz kommen können.

Auf Grundlage des durch den Zahnarzt festgelegten Konstruktionsplans wird die Apparatur dann im Labor angefertigt. Die einzelnen Komponenten werden dabei derart an dem Echtmodel angebracht, dass sie an den Zähnen bzw. den Zahnzwischenräumen angreifen und in aller Regel zur Zahninnenseite (orale Seite) verlaufen. Ferner werden sie am Echtmodell beispielsweise mittels Wachs fixiert. Sind alle aktiven und passiven Komponenten am Echtmodell angebracht, so können sie noch mittels einer oder mehreren Verbindungskomponenten verbunden werden, beispielsweise mittels eines Kunststoffkörpers. Dieser kann beispielsweise hergestellt werden, indem man sowohl ein Granulat aus vorpolymerisiertem Kunststoff als auch ein Kunststoffmonomer auf diejenigen Stellen des Echtmodells schüttet, an denen der Kunststoffkörper gebildet werden soll, und das Kunststoffmaterial anschließend auspolymerisieren lässt, vorzugsweise unter erhöhtem Druck und erhöhter Temperatur, beispielsweise bei 2 bar Druck und 30°C. Sind alle Komponenten durch den Kunststoff verbunden, kann die Apparatur vom Echtmodell abgenommen werden. Nach diesem Vorgang ist noch eine manuelle Nachbearbeitung durch Schleifen und Polieren erforderlich.

Gemäß Vorstehendem erfordert die Herstellung einer herausnehmbaren zahnmedizinischen Apparatur bislang eine große Anzahl von Hand durchzuführender Arbeitsschritte. Dies ist nicht nur zeitaufwändig, sondern birgt auch eine große Vielzahl von Fehlerquellen, beispielsweise durch unzureichende relative Orientierung der einzelnen Komponenten, die die Qualität der hergestellten Apparatur beeinträchtigen können.

US 2008/233530 A1 offenbart eine Vorrichtung zur Verbindung von kieferorthopädischen Apparaturen mit einem lichthärtbaren Klebstoff.

Es ist daher Aufgabe der vorliegenden Erfindung, das Verfahren zur Herstellung von herausnehmbaren zahnmedizinischen Apparaturen hinsichtlich der Qualität der hergestellten Apparaturen zu verbessern.

Diese Aufgabe wird erfindungsgemäß gelöst durch ein Verfahren zum Herstellen einer eine Mehrzahl von Komponenten umfassenden, herausnehmbaren zahnmedizinischen Apparatur auf Grundlage eines vorgegebenen Konstruktionsplans für die Apparatur, welches die Schritte umfasst:
a) Erstellen eines dreidimensionalen digitalen Modells der Ist-Stellung der Zähne eines Kiefers,
b) Vorsehen von dreidimensionalen digitalen Modellen von Halteelementen für wenigstens einen Teil der Komponenten der Apparatur,
c) Zusammenführen der digitalen Daten der dreidimensionalen Modelle der Halteelemente mit den digitalen Daten des dreidimensionalen digitalen Modells der Ist-Stellung der Zähne zum Erhalt eines gemeinsamen dreidimensionalen digitalen Gesamtmodells,
d) Herstellen eines dreidimensionalen Echtmodells der Ist-Stellung der Zähne auf Basis des dreidimensionalen digitalen Gesamtmodells,
e) Anbringen der Komponenten der herausnehmbaren zahnmedizinischen Apparatur an dem Echtmodell unter Zuhilfenahme der bei der Herstellung des Echtmodells gebildeten Halteelemente,
f) Verbinden der Komponenten zu der herausnehmbaren zahnmedizinischen Apparatur, und
g) Abnehmen der so hergestellten herausnehmbaren, zahnmedizinischen Apparatur von dem Echtmodell.

Dadurch, dass die Halteelemente für die Komponenten der Apparatur als digitale Modelle vorgesehen und mit dem digitalen Modell der Ist-Stellung der Zähne verbunden werden, und anschließend das Echtmodell auf Basis des so erhaltenen digitalen Gesamtmodells hergestellt wird, wird zum einen das Risiko von Fehlern des Laborpersonals bei der Positionierung der Komponenten reduziert, wenn nicht gar vollständig ausgeschlossen, und zum anderen wird das Risiko reduziert, wenn nicht gar vollständig ausgeschlossen, dass die am Echtmodell fixierten Komponenten bei der späteren Bearbeitung unbemerkt verrutschen oder in anderer Art und Weise verlagert werden. Insgesamt können somit unter Einsatz des erfindungsgemäßen Verfahrens qualitativ hochwertigere herausnehmbare, zahnmedizinische Apparaturen erhalten werden.

Die dreidimensionalen digitalen Modelle von Halteelementen können sowohl dreidimensionale digitale Modelle von Ansätzen sein, die vom Echtmodell abstehen, als auch in das Echtmodell eingebrachte Ausnehmungen. In der überwiegenden Mehrzahl der Fälle wird es sich bei den Halteelementen um Ansätze handeln, da eine Ausnehmung ja in die Zähne oder/und das Zahnfleisch oder/und den Gaumen einschneiden würde. Es gibt jedoch auch Komponenten, beispielsweise Schrauben, die zwar selbst nicht in die Zähne oder/und das Zahnfleisch oder/und den Gaumen eingreifen, die jedoch werksseitig mit Positionierungshilfselementen geliefert werden, die dies tun. Für die Aufnahme derartiger Positionierungshilfselementen können auch Halteelemente in Form von Ausnehmungen sinnvoll sein.

Die Halteelemente können aktive Haltelemente sein, d.h. Halteelemente, die die jeweilige Komponente unverlierbar halten, beispielsweise durch Einclipsen der Komponente. Es können aber auch passive Halteelemente verwendet werden, d.h. Halteelemente, in die die jeweilige Komponente einfach eingelegt wird und die die Komponente lediglich unter dem Einfluss der Schwerkraft formschlüssig halten. Im letztgenannten Fall kann die Komponente in dem Halteelement zusätzlich fixiert werden, beispielsweise durch Wachs oder dergleichen.

In Weiterbildung der Erfindung kann vorgesehen sein, dass das dreidimensionale digitale Modell der Ist-Stellung der Zähne gemäß Schritt a) erstellt wird, indem man in einem ersten Unterschritt, beispielsweise durch Abdruck, ein Negativechtmodell der Ist-Stellung der Zähne erstellt, in einem zweiten Unterschritt auf Basis dieses Negativechtmodells, beispielsweise durch Abguss, ein Positivechtmodell der Ist-Stellung der Zähne erstellt, und in einem dritten Unterschritt durch dreidimensionales Scannen dieses Positivechtmodells das dreidimensionale digitale Modell der Ist-Stellung der Zähne erstellt. Dabei kann im ersten Unterschritt als Abdruckmaterial jedes gängige, auf dem Markt erhältliche und für kieferorthopädische Anwendungen zugelassene Abdruckmaterial verwendet werden. Beispielhaft seien hier Silikone, Alginate und Hydro-Kolloide genannt, wobei sich diese Aufzählung ausdrücklich nicht als abschließend versteht. Alle diese Materialien härten üblicherweise durch Zeitablauf aus. Ferner können als Abgussmaterialien für den zweiten Unterschritt Kunststoffe oder Gips genannt werden, wobei Gips durch Zeitablauf aushärtet, während bei Kunststoffen das Aushärten gegebenenfalls auch durch Bestrahlung mit UV-Licht durchgeführt oder zumindest unterstützt werden kann. Auch diese Aufzählung versteht sich ausdrücklich nicht als abschließend.

Alternativ ist es jedoch auch möglich, dass das dreidimensionale digitale Modell der Ist-Stellung der Zähne gemäß Schritt a) durch dreidimensionales Scannen der Zähne, beispielsweise mittels eines Handscanners, erstellt wird.

Um sicherstellen zu können, dass die zahnmedizinische Apparatur problemlos herausgenommen und wieder eingesetzt werden kann, wird vorgeschlagen, dass zeitlich vor Schritt d) am digitalen Modell der Ist-Stellung der Zähne oder am digitalen Gesamtmodell hinterschnittene Bereiche digital ausgefüllt werden.

Im Schritt f) können die Komponenten der herausnehmbaren zahnmedizinischen Apparatur beispielsweise dadurch verbunden werden, dass man sie stoffschlüssig miteinander verbindet, beispielsweise verlötet, verschweißt oder verklebt. Alternativ ist es jedoch auch möglich, hierfür vorgesehene Verankerungsabschnitte der Komponenten, vorzugsweise formschlüssig, in Kunststoff einzubetten.

Bei der erstgenannten Verbindungsalternative werden die Halteelemente vorzugsweise derart angeordnet und ausgebildet, dass die zum Verlöten, Verschweißen oder Verkleben der Komponenten bestimmten Abschnitte der Komponenten für das Verlöten, Verschweißen oder Verkleben frei zugänglich sind.

Für die zweitgenannte Verbindungsalternative des Einbettens in Kunststoff können wiederum verschiedene Verbindungsvarianten in Betracht gezogen werden, wobei allen gemeinsam ist, dass die Verankerungsabschnitte zur sicheren Verankerung im Kunststoff beispielsweise wellenförmig oder zick-zack-förmig ausgebildet sein oder auch eine Schlaufenbiegung oder eine Ösenbiegung aufweisen können. Bei aktiven Komponenten ist es zudem denkbar, dass ein aktiver Abschnitt der jeweiligen Komponente gleichzeitig auch als Verankerungsabschnitt dient und in Kunststoff eingebettet wird. Als Beispiel sei eine Dehnschraube genannt, bei welcher ein einen Innengewindeabschnitt aufweisender Teil in Kunststoff eingebettet werden kann.

Gemäß einer ersten Verbindungsvariante kann der Schritt f folgende Unterschritte umfassen:
f1) Vorsehen eines dreidimensionalen digitalen Models eines Deckels zur Bildung eines Hohlraums, in den die Verankerungsabschnitte der Komponenten hineinragen,
f2) Herstellen eines dreidimensionalen Echtmodells des Deckels,
f3) Aufsetzen des Echtmodells des Deckels auf das Echtmodell der Ist-Stellung der Zähne,
f4) Befüllen des zwischen dem Echtmodell der Ist-Stellung der Zähne und dem Echtmodell des Deckels verbleibenden Hohlraums mit Kunststoff, und
f5) Aushärten-Lassen des Kunststoffs.

Bei dieser Verbindungsvariante bildet der Deckel, genauer gesagt das Echtmodell des Deckels, mit dem Echtmodell der Ist-Stellung der Zähne schon vor dem Einfüllen des Kunststoffs einen Formhohlraum, der der Gestalt des auszubildenden Kunststoffkörpers der herausnehmbaren zahnmedizinischen Apparatur entspricht. Erforderlichenfalls kann der Deckel auch mehrteilig ausgebildet sein. Die zum Einfüllen des Kunststoffs in den Formhohlraum erforderliche Öffnung kann bereits am digitalen Modell vorgesehen werden. Sie kann in einfacher Weise aber auch erst nachträglich, d.h. in das Echtmodell des Deckels oder/und der Ist-Stellung der Zähne eingebracht werden.

Gemäß einer alternativen Verbindungsvariante kann der Schritt f folgende Unterschritte umfassen:
f1') Vorsehen eines dreidimensionalen digitalen Models eines Deckels zur Bildung eines Hohlraums, in den die Verankerungsabschnitte der Komponenten hineinragen,
f2') Herstellen eines dreidimensionalen Echtmodells des Deckels,
f3') Auftragen von Kunststoff auf das Echtmodell der Ist-Stellung der Zähne,
f4') Aufsetzen des Echtmodells des Deckels auf das Echtmodell der Ist-Stellung der Zähne, und
f5') Aushärten-Lassen des Kunststoffs.

Gemäß dieser Verbindungsvariante wird der Kunststoff mit, vorzugsweise geringfügigem, Überschuss auf das Echtmodell des Ist-Zustands der Zähne aufgetragen, so dass beim Aufsetzen des Echtmodells des Deckels der gesamte zwischen dem Echtmodell der Ist-Stellung der Zähne und dem Echtmodell des Deckels verbleibende Hohlraum mit Kunststoff ausgefüllt wird. Dass letzteres erreicht worden ist, kann beispielsweise dadurch angezeigt werden, dass der Überschuss an Kunststoff aus dem Randspalt zwischen dem Echtmodell der Ist-Stellung der Zähne und dem Echtmodell des Deckels hervortritt.

In Weiterbildung beider Verbindungsvarianten wird vorgeschlagen, dass der Deckel, d.h. das dreidimensionale digitale Modell des Deckels oder/und das Echtmodell des Deckels, Öffnungen, vorzugsweise Randeinkerbungen, aufweist, die für den Durchtritt der Verankerungsabschnitte der Komponenten bestimmt sind. Auf diese Weise können Beschädigungen der Komponenten, beispielsweise durch Einklemmen zwischen den Echtmodellen des Deckel und der Ist-Stellung der Zähne vermieden werden.

Ebenso wird in Weiterbildung beider Verbindungsvarianten vorgeschlagen, dass am Echtmodell des Deckels und am Echtmodell der Ist-Stellung der Zähne wenigstens ein Positionierungshilfselement vorgesehen ist, welches das Auffinden der korrekten Relativstellung des Echtmodells der Ist-Stellung der Zähne und des Echtmodells des Deckels erleichtert, und zwar vorzugsweise nicht nur in den im Wesentlichen in der vom Kieferbogen aufgespannten Ebene verlaufenden Raumrichtungen, beispielsweise durch die Lage des Positionierungshilfselements bzw. der Positionierungshilfselemente am Echtmodell der Ist-Stellung der Zähne, sondern auch in der orthogonal zu dieser Ebene verlaufenden Raumrichtung, beispielsweise durch Vorsehen von zusammenwirkenden Anschlags- und Gegenanschlagsflächen an den Echtmodellen.

Um das Entformen des ausgehärteten Kunststoffkörpers aus dem Formhohlraum erleichtern zu können wird ferner vorgeschlagen, dass man das Echtmodell der Ist-Stellung der Zähne oder/und das Echtmodell des Deckels vor dem Einfüllen des Kunststoffs mit einem Trennmittel beschichtet. Als Trennmittel kann beispielsweise eine Trennfolie oder auch Vaseline verwendet werden.

Ferner ist es vorteilhaft, bei der Bestimmung der Form des dreidimensionalen digitalen Modells des Deckels den Formhohlraum einerseits in einer vom Gaumen weg weisenden Richtung so dünn wie möglich auszubilden, um den den Tragekomfort für den Patienten zu erhöhen, und andererseits so dick wie nötig auszubilden, um für die Verankerungsabschnitte der Komponenten einen sicheren Halt bereitstellen zu können. Als ein diesen beiden einander widerstrebenden Forderungen Rechnung tragender Kompromiss hat sich eine Dicke von zwischen etwa 1 mm und etwa 5 mm erwiesen.

In Weiterbildung der Erfindung kann vorgesehen sein, dass die Daten des im Schritt a) erstellten, dreidimensionalen digitalen Modells der Ist-Stellung der Zähne zusammen mit dem vorgegebenen Konstruktionsplan für die Apparatur zur Herstellung wenigstens eines Teil der Komponenten an eine Drahtbiegemaschine weitergeleitet werden. Dabei ist es zur Reduzierung von Abfall ferner vorteilhaft, wenn die Drahtbiegemaschine eine Mehrzahl von Komponenten, vorzugsweise alle Komponenten, aus einem einzigen zusammenhängenden Drahtstück herstellt.

Obgleich bislang lediglich auf herausnehmbare zahnmedizinische Apparaturen Bezug genommen worden ist, welche dazu diente die Stellung der Zähne eines Kiefers, d.h. des Oberkiefers oder des Unterkiefers, aufrechtzuerhalten oder in eine gewünschte Soll-Stellung überzuführen, kann die Erfindung auch zur Herstellung von herausnehmbaren zahnmedizinischen Apparaturen verwendet werden, die dazu dienen, die Relativstellung von Oberkiefer und Unterkiefer zu beeinflussen. Hierzu wird das erfindungsgemäße Verfahren beispielsweise zweimal durchgeführt, einmal zur Herstellung einer herausnehmbaren zahnmedizinischen Apparatur für den Oberkiefer und einmal zur Herstellung einer herausnehmbaren zahnmedizinischen Apparatur für den Unterkiefer, wobei wenigstens eine der Komponenten oder/und der die Komponenten verbindende Kunststoffkörper einen Abschnitt aufweist, der zum Zusammenwirken einer entsprechenden weiteren Apparatur aufweist, welche dem jeweils anderen Kiefer zugeordnet ist.

Nachzutragen ist noch, dass die nach dem erfindungsgemäßen Verfahren hergestellte herausnehmbare zahnmedizinische Apparatur auch mit einem so genannten Pin zusammenwirken kann, d.h. einem Befestigungselement, insbesondere einer Schraube, die in der unmittelbaren Nachbarschaft eines Zahns oder auch im Gaumen in den Knochen eingreift. An diesem Pin kann die Apparatur befestigt werden oder sich abstützen.

Die Erfindung wird im Folgenden anhand der beigefügten Zeichnung an Ausführungsbeispielen näher erläutert werden. Es stellt dar:
- Figur 1: eine schematische Darstellung einer ersten Ausführungsform einer zahnmedizinischen Apparatur, die mit dem erfindungsgemäßen Verfahren herstellbar ist;
- Figur 2: eine schematische Darstellung eines dreidimensionalen digitalen Modells der Ist-Stellung der Zähne eines Kiefers des Patienten;
- Figur 3: eine Ansicht ähnlich Figur 3 zur Erläuterung der Festlegung des Konstruktionsplans für die zahnmedizinische Apparatur gemäß Figur 1;
- Figuren 4a und 4b: schematische Darstellungen zur Erläuterung des Vorsehens von Halteelementen für die Komponenten der zahnmedizinischen Apparatur;
- Figur 5: eine schematische Darstellung eines Echtmodells der Ist-Stellung der Zähne einschließlich der Halteelemente für die Komponenten der zahnmedizinischen Apparatur;
- Figur 6: das Echtmodell gemäß Figur 5 mit den in die Halteelemente eingelegten Komponenten der zahnmedizinischen Apparatur;
- Figuren 7a und 7b: Darstellungen zur Erläuterung der Bildung eines Formhohlraums zur Bildung eines die Komponenten verbindenden Kunststoffkörpers;
- Figur 8: eine Detaildarstellung zur Erläuterung der Einbettung der Komponenten der zahnmedizinischen Apparatur in den Kunststoffkörper;
- Figur 9: eine Darstellung ähnlich Figur 1 einer zweiten Ausführungsform einer zahnmedizinischen Apparatur, die mit dem erfindungsgemäßen Verfahren herstellbar ist;
- Figur 10: eine Darstellung ähnlich Figur 5 für die zweite Ausführungform; und
- Figur 11: eine Darstellung ähnlich Figur 6 für die zweite Ausführungform.

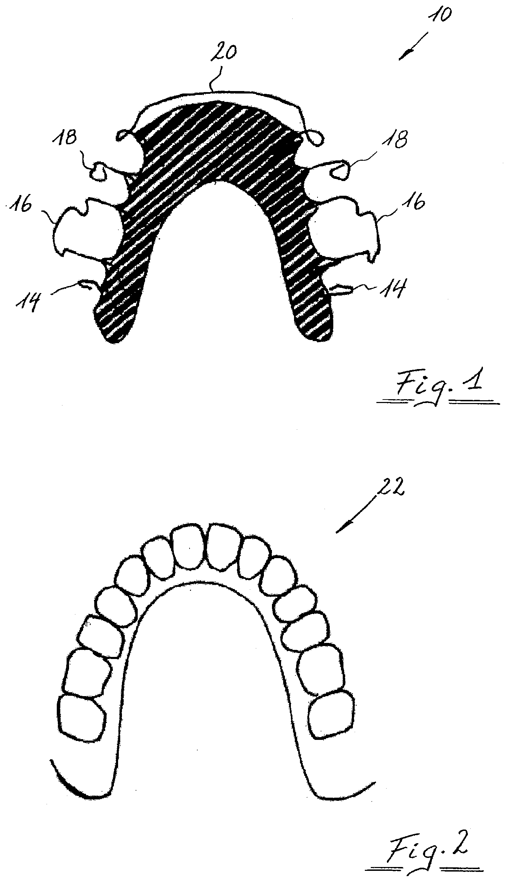

In Figur 1 ist eine erste Ausführungsform einer zahnmedizinischen Apparatur, die mit dem erfindungsgemäßen Verfahren herstellbar ist, allgemein mit 10 bezeichnet. Die zahnmedizinische Apparatur 10 umfasst einen Kunststoffkörper 12, in den die freien Enden einer Mehrzahl von, beispielsweise aus gebogenem Draht gefertigten, Komponenten 14, 16, 18, 20 eingebettet sind. In dem dargestellten, aber keinesfalls beschränkenden Ausführungsbeispiel umfasst die Apparatur 12 zwei Auflagen 14, zwei Adamsklammern 16, zwei Dreiecksklammern 18 und einen Labialbogen 20.

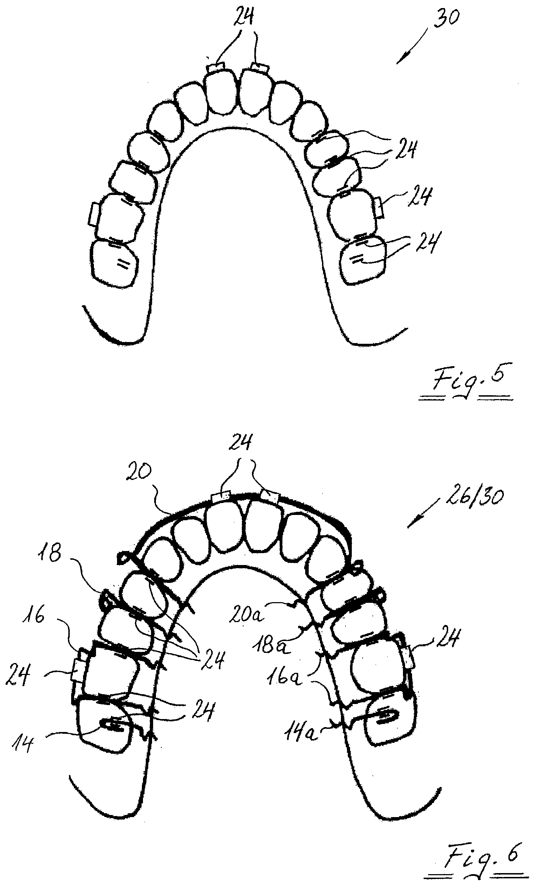

Zur Herstellung der zahnmedizinischen Apparatur 10 wird erfindungsgemäß wie folgt vorgegangen:
Zunächst wird ein dreidimensionales digitales Modell 22 (im Folgenden auch "3D-Datenmodell") der Ist-Stellung der Zähne des Patienten einschließlich Zahnfleisch und Gaumen erstellt. Ein derartiges 3D-Datenmodell 22 ist beispielhaft in Figur 2 dargestellt. Dabei sei bereits an dieser Stelle angemerkt, dass Darstellungen ähnlich der in Figur 2 gezeigten in den Figuren 5 und 6 auch zur Darstellung von Echtmodellen, d.h. physisch greifbaren Modellen, verwendet werden. Ob es sich bei den Darstellungen der einzelnen Figuren jeweils um die Darstellung eines 3D-Datenmodells oder eines Echtmodells handelt, wird daher in jedem Einzelfall gesondert angegeben.

In Figur 2 ist also ein 3D-Datenmodell 22 der Ist-Stellung der Zähne des Patienten einschließlich Zahnfleisch und Gaumen dargestellt. Dieses 3D-Datenmodell 22 kann beispielsweise durch dreidimensionales Scannen der Zähne des Patienten, beispielsweise mittels eines Handscanners, erhalten werden. Es ist jedoch auch möglich, zunächst einen Abdruck von den Zähnen des Patienten zu nehmen, auf Grundlage dieses Abdrucks einen Abguss herzustellen und schließlich diesen Abguss dreidimensional zu scannen.

Im nächsten Schritt legt der behandelnde Zahnarzt den Konstruktionsplan der zahnmedizinischen Apparatur 10 fest. Hierzu werden ihm am Bildschirm eines Computers zum einen das 3D-Datenmodell 22 der Ist-Stellung der Zähne angezeigt, und zum anderen eine Auswahl verschiedener Typen von Komponenten, unter anderem auch die vorstehend genannten Komponenten Auflage 14, Adamsklammer 16, Dreiecksklammer 18 und Labialbogen 20. Anschließend ordnet der behandelnde Zahnarzt jedem Zahn oder/und jedem Zahnpaar oder/und jeder Zahngruppe, bei dem bzw. bei der er es für erforderlich erachtet, eine der ihm in der Auswahl angebotenen Komponenten zu. Im dargestellten Fall ordnet er den von den Schneidezähnen und den Eckzähnen gebildeten Zahngruppe einen Labialbogen 20 zu, weist dem von den "4er"- und "5er"-Zähnen jeder Seite gebildeten Zahnpaar eine Dreiecksklammer 18 zu, sowie den "6er"-Zähnen beider Seiten eine Adamsklammer 16 und den "7er"-Zähnen jeder Seite eine Auflage 14.

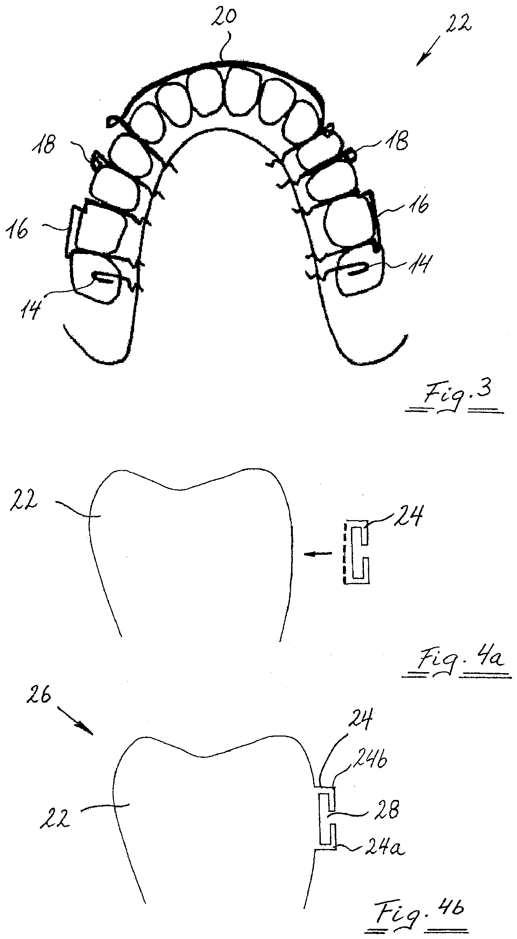

Der Computer berechnet in Abhängigkeit des vom Zahnarzt vorgegebenen Komponententyp und dem 3D-Datenmodell 22 der Ist-Stellung der Zähne die jeweils optimale Form der jeweils vorgegebenen Komponente und stellt diese am Bildschirm dar (siehe Figur 3). Jede der Komponenten verfügt über wenigstens einen wellenförmig oder zick-zack-förmig ausgebildeten Verankerungsabschnitt 14a, 16a, 18a, 20a, der dazu bestimmt ist, an der fertigen Apparatur 10 in den Kunststoffkörper 12 eingebettet zu sein.

Damit die Komponenten 14, 16, 18, 20 der zahnmedizinischen Apparatur 10 beim Übergang zum Echtmodell an dem Zahnmodell halten, ist es erforderlich, an dem Zahnmodell Halteelemente 24 für die Komponenten vorzusehen. Diese Halteelemente 24 werden zunächst als von dem 3D-Datenmodell 22 der Ist-Stellung der Zähne getrennte 3D-Datenmodelle bereitgestellt (siehe Figur 4a) und anschließend vom Computer mit dem 3D-Datenmodell 22 der Ist-Stellung der Zähne zu einem dreidimensionalen digitalen Gesamtmodell 26 zusammengefügt (siehe Figur 4b).

Die zum Halten einer Komponente erforderliche Anzahl von Halteelementen 24, sowie deren optimale Form und optimale Position am Zahnmodell 22 wird vorzugsweise ebenfalls vom Computer in Abhängigkeit von der Gestalt des 3D-Datenmodells 22 der Zähne, dem vom Zahnarzt ausgewählten Komponententyp und der, beipielsweise vom Computer bestimmten, Gestalt der jeweiligen Komponente ermittelt. Grundsätzlich ist es jedoch auch denkbar, dass der Zahnarzt die jeweils geeignetsten Halteelemente 24 auswählt und am 3D-Datenmodell 22 der Zähne positioniert.

Es können ganz unterschiedliche Typen von Halteelementen 24 zum Einsatz kommen. So ist in den Figuren 4a und 4b beispielhaft ein aktives Halteelement 24 dargestellt, in welches die jeweilige Komponente eingeclipst werden kann, und das hierzu einen von zwei Schenkeln 24a und 24b umgrenzten Aufnahmeraum 28 für die Komponente aufweist. Grundsätzlich können aber auch passive Halteelemente eingesetzt werden, die die Komponente nicht aktiv halten, sondern in die die Komponente eingelegt werden kann, so dass sie im Wesentlichen nur schwerkraftbedingt gehalten wird. Derartige passive Halteelemente können beispielsweise lediglich einen unteren Schenkel 24a aufweisen.

Der nächste Schritt besteht nun darin, das dreidimensionale digitale Gesamtmodell 26 der Zähne einschließlich der Halteelemente 24 in ein Echtmodell 30 (siehe Figur 5) überzuführen. Hierzu kann das digitale Gesamtmodell 26 beispielsweise mittels eines 3D-Plotters ausgedruckt werden.

Ein weiterer Herstellungsschritt, der allerdings nicht Gegenstand der vorliegenden Erfindung ist, ist die Anfertigung der Komponenten 14, 16, 18 und 20. Diese kann zwar grundsätzlich von einem Zahntechniker unter Zuhilfenahme des Echtmodells 30 der Zähne durchgeführt werden. Bevorzugt ist es jedoch, wenn die Komponenten 14, 16, 18 und 20 unter Einsatz einer Drahtbiegemaschine oder dergleichen auf Basis der vom Computer berechneten Gestalt der Komponenten automatisiert angefertigt werden.

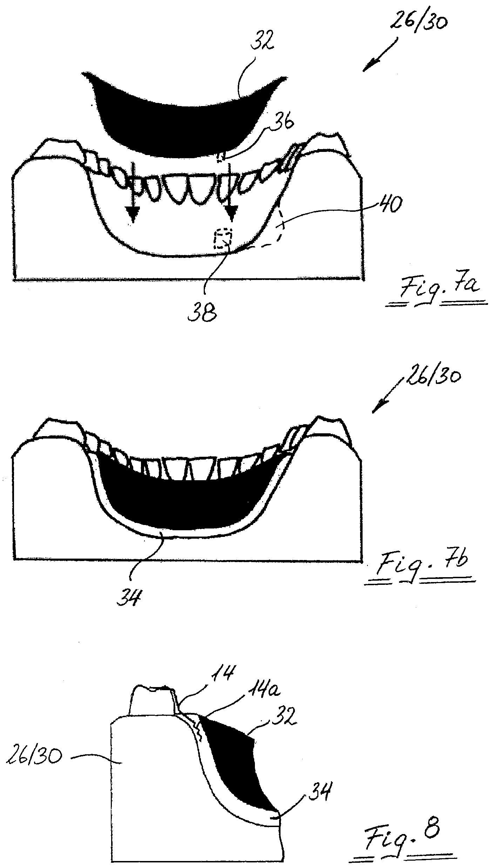

Die so hergestellten Komponenten 14, 16, 18 und 20 werden dann unter Zuhilfenahme der Haltelemente 24 an dem Echtmodell 30 angeordnet. Der hierdurch erreichte Zustand ist in Figur 6 dargestellt. Nun fehlt nur noch der die Komponenten 14, 16, 18 und 20 verbindende Kunststoffkörper 12. Zu dessen Herstellung kann beispielsweise wie folgt vorgegangen werden:
Ausgehend von dem mit den Datenmodellen der Komponenten 14, 16, 18 und 20 bestückten 3D-Datenmodell 26 der Zähne einschließlich der Halteelemente 24, d.h. einem Datenmodell, das dem in Figur 6 dargestellten Zustand entspricht, wird vom Computer das 3D-Datenmodell eines Deckels 32 (siehe Figur 7a) berechnet, der zusammen mit dem Datenmodell 26 einen Formhohlraum 34 bildet, der der Gestalt des herzustellenden Kunststoffkörpers 12 entspricht. Wie in Figur 8 beispielhaft für die Auflage 14 dargestellt ist, ragen die Verankerungsabschnitte 14a, 16a, 18a und 20a in diesen Formhohlraum 34 hinein, so dass sie an der fertigen Apparatur 10 in den Kunststoffkörper 12 eingebettet sind.

Wie in Figur 7a gestrichelt angedeutet ist, können an dem Deckel 32 und dem 3D-Datenmodell 26 der Zähne zusammenwirkende Führungselemente 36, 38 vorgesehen werden, die nach dem Ausdrucken des Deckels 32, beispielsweise mittels eines 3D-Plotters, das Zusammenfügen des Deckels 32 mit dem Echtmodell 30 der Zähne einschließlich der Halteelemente 24 und der daran angebrachten Komponenten 14, 16, 18 und 20 erleichtern. Lediglich der Vollständigkeit halber sei darauf hingewiesen, dass auch mehrere derartiger Führungselementpaare vorgesehen sein können.

Nachzutragen ist noch, dass im Zuge der Berechnung des Datenmodells des Deckels 32 oder auch in einem vorgeschalteten Schritt das Datenmodell 26 der Zähne überarbeitet werden kann, um Hinterschneidungen 40 (siehe Figur 7a) zu eliminieren, die das Entformen der fertig hergestellten Apparatur 10, sowie das Einsetzen der Apparatur 10 in den Mund des Patienten und das Wieder-Herausnehmen derselben behindern oder gar unmöglich machen würden.

Gemäß einer ersten Alternative zur Herstellung des Kunststoffkörpers 12 kann der Deckel 32 auf das mit den Halteelementen 14, 16, 18 und 20 bestückte Echtmodell 30 der Zähne aufgesetzt werden. Anschließend in den Formhohlraum 34 durch eine (nicht dargestellte) Öffnung Kunststoffmasse eingefüllt, die die Verankerungsabschnitte 14a, 16a, 18a und 20a der Komponenten 14, 16, 18 und 20 umschließt. Nach dem Aushärten des Kunststoffs wird der Deckel 32 zum Entformen der fertig hergestellten zahnmedizinischen Apparatur 10 von dem Echtmodell 30 der Zähne abgenommen und die Apparatur 10, genauer gesagt deren Draht-Komponenten 14, 16, 18 und 20, aus den zugeordneten Halteelementen 24 gelöst.

Die Öffnung zum Einfüllen der Kunststoffmasse in den Formhohlraum 34 kann bereits bei der Berechnung des 3D-Datenmodells des Deckels 32 vorgesehen werden, so dass sie nach dem Ausdrucken des Deckels 32 mittels des 3D-Plotters bereits vorhanden ist. Es ist jedoch auch möglich, sie erst nach dem Ausdrucken des Deckels 32 in diesem vorzusehen, beispielsweise mittels Bohren, Stanzen oder dergleichen.

Gemäß einer zweiten Alternative zur Herstellung des Kunststoffkörpers 12 kann auf das mit den Komponenten 14, 16, 18 und 20 bestückte Echtmodell 30 der Zähne einschließlich der Halteelemente 24 Kunststoffmassen derart aufgetragen werden, dass die Verankerungsabschnitte 14a, 16a, 18a und 20a der Komponenten 14, 16, 18 und 20 darin eingebettet sind. Danach setzt man den Deckel 32 wie eine Art Pressstempel auf, wobei sich der Kunststoff in dem Formhohlraum 34 verteilt und, sofern er im Überschuss aufgetragen worden ist, auch aus diesem austritt.

Beide Verfahren haben ihre Vor- und Nachteile. So ist die Nachbearbeitung der fertigen Apparatur 10 bei dem "Einfüllverfahren" weniger aufwändig als bei dem "Pressverfahren". Insbesondere fällt weniger Kunststoffabfall an. Allerdings ist es bei dem "Einfüllverfahren" schwieriger, eine gleichmäßige Verteilung des Kunststoffs in dem Formhohlraum 34 sicherzustellen. Beim "Pressverfahren" muss hingegen mit ausreichend Überschuss an Kunststoffmasse gearbeitet werden, um ein vollständiges Befüllen des Formhohlraums 34 gewährleisten zu können.

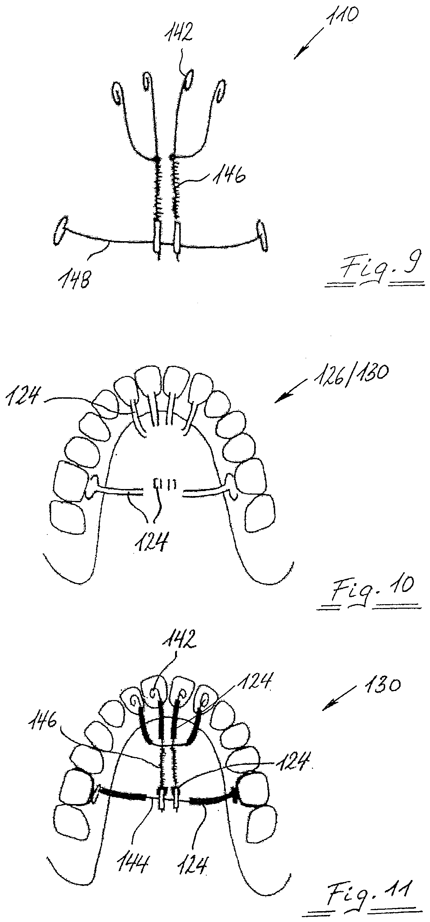

Wie aus den Figuren 9, 10 und 11 zu ersehen ist, können mit dem erfindungsgemäßen Verfahren auch zahnmedizinische Apparaturen 110 hergestellt werden, die ausschließlich aus Metallkomponenten 142, 144, 146 zusammengesetzt sind, welche durch Löten oder Schweißen oder Kleben, vorzugsweise durch Löten, miteinander verbunden werden.

Figur 9 zeigt die herzustellende medizinische Apparatur 110 und entspricht somit Figur 1.

Figur 10 zeigt das mit den Halteelementen 124 für die Komponenten 142, 144, 146 bestückte 3D-Modell der Zähne des Patienten, wobei es sich bei diesem Modell analog zu Figur 5 sowohl um ein 3D-Datenmodell 126 als auch um ein, beispielsweise durch Ausdrucken mittels eines 3D-Plotters erhaltenes, Echtmodell 130 handeln kann.

Figur 11 zeigt schließlich das mit den Komponenten 142, 144, 146 bestückte Echtmodell 130 in einer Darstellung analog Figur 6. Dabei ist darauf hinzuweisen, dass die Halteelemente 124 derart bemessen und positioniert sind, dass diejenigen Abschnitte der Komponenten 142, 144, 146, die zu deren Verbindung bestimmt sind, für das entsprechende Verbindungswerkzeug, beispielsweise den Lötkolben, frei zugänglich sind.

## Patentansprüche

1. Verfahren zum Herstellen einer eine Mehrzahl von Komponenten (14, 16, 18, 20; 142, 144, 146) umfassenden, herausnehmbaren zahnmedizinischen Apparatur (10; 110), welche dazu bestimmt ist, einen aufrechterhaltenden oder verändernden Einfluss auf die Zahnstellung eines Patienten zu nehmen, auf Grundlage eines vorgegebenen Konstruktionsplans für die Apparatur, das Verfahren umfassend die Schritte:
a) Erstellen eines dreidimensionalen digitalen Modells (22) der Ist-Stellung der Zähne eines Kiefers,
b) Vorsehen von dreidimensionalen digitalen Modellen von Halteelementen (24; 124) für wenigstens einen Teil der Komponenten der Apparatur (10; 110),
c) Zusammenführen der digitalen Daten der dreidimensionalen Modelle der Halteelemente (24; 124) mit den digitalen Daten des dreidimensionalen digitalen Modells (22) der Ist-Stellung der Zähne zum Erhalt eines gemeinsamen dreidimensionalen digitalen Gesamtmodells (26; 126),
d) Herstellen eines dreidimensionalen Echtmodells (30; 130) der Ist-Stellung der Zähne auf Basis des dreidimensionalen digitalen Gesamtmodells (26; 126),
e) Anbringen der Komponenten (14, 16, 18, 20; 142, 144, 146) der herausnehmbaren zahnmedizinischen Apparatur (10; 110) an dem Echtmodell (30; 130) unter Zuhilfenahme der bei der Herstellung des Echtmodells (30; 130) gebildeten Halteelemente (24; 124),
f) Verbinden der Komponenten (14, 16, 18, 20; 142, 144, 146) zu der herausnehmbaren zahnmedizinischen Apparatur (10; 110), und
g) Abnehmen der so hergestellten herausnehmbaren, zahnmedizinischen Apparatur (10; 110) von dem Echtmodell.

2. Verfahren nach Anspruch 1,
**dadurch gekennzeichnet, dass** wenigstens ein Halteelement (24; 124) ein aktives Halteelement ist oder/und dass wenigstens ein Halteelement ein passives Halteelement ist.

3. Verfahren nach Anspruch 1 oder 2,
**dadurch gekennzeichnet, dass** das dreidimensionale digitale Modell (22) der Ist-Stellung der Zähne gemäß Schritt a) erstellt wird, indem man in einem ersten Unterschritt, beispielsweise durch Abdruck, ein Negativechtmodell der Ist-Stellung der Zähne erstellt, in einem zweiten Unterschritt auf Basis dieses Negativechtmodells, beispielsweise durch Abguss, ein Positivechtmodell der Ist-Stellung der Zähne erstellt, und in einem dritten Unterschritt durch dreidimensionales Scannen dieses Positivechtmodells das dreidimensionale digitale Modell der Ist-Stellung der Zähne erstellt.

4. Verfahren nach Anspruch 1 oder 2,
**dadurch gekennzeichnet, dass** das dreidimensionale digitale Modell (22) der Ist-Stellung der Zähne gemäß Schritt a) durch dreidimensionales Scannen der Zähne, beispielsweise mittels eines Handscanners, erstellt wird.

5. Verfahren nach einem der Ansprüche 1 bis 4,
**dadurch gekennzeichnet, dass** zeitlich vor Schritt d) am digitalen Modell der Ist-Stellung der Zähne oder am digitalen Gesamtmodell hinterschnittene Bereiche (40) digital ausgefüllt werden.

6. Verfahren nach einem der Ansprüche 1 bis 5,
**dadurch gekennzeichnet, dass** man die Komponenten (14, 16, 18, 20) der herausnehmbaren zahnmedizinischen Apparatur (10) im Schritt f) miteinander verbindet, indem man hierfür vorgesehene Verankerungsabschnitte (14a, 16a, 18a, 20a) der Komponenten (14, 16, 18, 20) in Kunststoff einbettet.

7. Verfahren nach Anspruch 6,
**dadurch gekennzeichnet, dass** der Schritt f folgende Unterschritte umfasst:
f1) Vorsehen eines dreidimensionalen digitalen Models eines Deckels (32) zur Bildung eines Hohlraums (34), in den die Verankerungsabschnitte (14a, 16a, 18a, 20a) der Komponenten (14, 16, 18, 20) hineinragen,
f2) Herstellen eines dreidimensionalen Echtmodells des Deckels (32),
f3) Aufsetzen des Echtmodells des Deckels (32) auf das Echtmodell (30) der Ist-Stellung der Zähne,
f4) Befüllen des zwischen dem Echtmodell (30) der Ist-Stellung der Zähne und dem Echtmodell des Deckels (32) verbleibenden Hohlraums (34) mit Kunststoff, und
f5) Aushärten-Lassen des Kunststoffs.

8. Verfahren nach Anspruch 7,
**dadurch gekennzeichnet, dass** der Deckel (32) ein- oder mehrteilig ausgebildet ist.

9. Verfahren nach Anspruch 7 oder 8,
**dadurch gekennzeichnet, dass** die Öffnung zum Einfüllen des Kunststoffs in das Echtmodell des Deckels (32) oder das Echtmodell (30) der Ist-Stellung der Zähne eingebracht wird.

10. Verfahren nach Anspruch 6,
**dadurch gekennzeichnet, dass** der Schritt f folgende Unterschritte umfasst:
f1') Vorsehen eines dreidimensionalen digitalen Models eines Deckels (32) zur Bildung eines Hohlraums (34), in den die Verankerungsabschnitte (14a, 16a, 18a, 20a) der Komponenten (14, 16, 18, 20) hineinragen,
f2') Herstellen eines dreidimensionalen Echtmodells des Deckels (32),
f3') Auftragen von Kunststoff auf das Echtmodell (30) der Ist-Stellung der Zähne,
f4') Aufsetzen des Echtmodells des Deckels (32) auf das Echtmodell (30) der Ist-Stellung der Zähne, und
f5') Aushärten-Lassen des Kunststoffs.

11. Verfahren nach einem der Ansprüche 6 bis 10,
**dadurch gekennzeichnet, dass** der Deckel (32) Öffnungen, vorzugsweise Randeinkerbungen, aufweist, die für den Durchtritt der Verankerungsabschnitte (14a, 16a, 18a, 20a) der Komponenten (14, 16, 18, 20) bestimmt sind.

12. Verfahren nach einem der Ansprüche 6 bis 11,
**dadurch gekennzeichnet, dass** am Echtmodell des Deckels (32) und am Echtmodell (30) der Ist-Stellung der Zähne wenigstens ein Positionierungshilfselement (36, 38) vorgesehen ist.

13. Verfahren nach einem der Ansprüche 6 bis 12,
**dadurch gekennzeichnet, dass** man das Echtmodell (30) der Ist-Stellung der Zähne oder/und das Echtmodell des Deckels (32) vor dem Einfüllen des Kunststoffs mit einem Trennmittel beschichtet.

14. Verfahren nach einem der Ansprüche 1 bis 5,
**dadurch gekennzeichnet, dass** man die Komponenten (142, 144, 146) der herausnehmbaren zahnmedizinischen Apparatur (110) im Schritt f) miteinander verbindet, indem man sie miteinander stoffschlüssig verbindet, beispielsweise verlötet, verschweißt oder verklebt.

15. Verfahren nach einem der Ansprüche 1 bis 14,
**dadurch gekennzeichnet, dass** die Daten des im Schritt a) erstellten, dreidimensionalen digitalen Modells (22) der Ist-Stellung der Zähne zusammen mit dem vorgegebenen Konstruktionsplan für die Apparatur (10; 110) zur Herstellung wenigstens eines Teil der Komponenten (14, 16, 18, 20; 142, 144, 146) an eine Drahtbiegemaschine weitergeleitet werden.

16. Verfahren nach einem der Ansprüche 1 bis 15,
**dadurch gekennzeichnet, dass** wenigstens eine der Komponenten oder/und der die Komponenten verbindende Kunststoffkörper einen Abschnitt aufweist, der zum Zusammenwirken einer entsprechenden weiteren Apparatur aufweist, welche dem jeweils anderen Kiefer zugeordnet ist.

## Claims

1. Method for producing a removable dental appliance (10; 110) comprising a plurality of components (14, 16, 18, 20; 142, 144, 146) is designed to exert a retaining or changing influence on the position of patient's teeth, on the basis of a predefined design plan for the appliance, wherein the method comprises the steps of:
a) creating a three-dimensional digital model (22) of the actual position of the teeth of a jaw,
b) providing three-dimensional digital models of retaining elements (24; 124) for at least some of the components of the appliance (10; 110),
c) combining the digital data of the three-dimensional models of the retaining elements (24; 24) with the digital data of the three-dimensional digital model (22) of the actual position of the teeth to obtain a common three-dimensional digital overall model (26; 126),
d) preparing a three-dimensional real model (30; 130) of the actual position of the teeth based on the three- dimensional digital overall model (26; 126),
e) mounting the components (14, 16, 18, 20; 142, 144, 146) of the removable dental appliance (10; 110) on the real model (30; 130) with the aid of the retaining elements (24; 124) formed during the production of the real model (30; 130),
f) connecting the components (14, 16, 18, 20; 142, 144, 146) to the removable dental appliance (10; 110), and
g) removing the removable dental appliance (10; 110) produced in this manner from the real model.

2. Method according to Claim 1,
**characterized in that** at least one retaining element (24; 124) is an active retaining element and/or **in that** at least one retaining element is a passive retaining element.

3. Method according to Claim 1 or 2,
**characterized in that** the three-dimensional digital model (22) of the actual position of the teeth is created according to step a) by creating a negative real model of the actual position of the teeth, by impression for example, in a first sub-step, creating a positive real model of the actual position of the teeth based on this negative real model, by casting for example, in a second sub-step, and preparing the three-dimensional digital model of the actual position of the teeth by three-dimensional scanning of this positive real model in a third sub-step.

4. Method according to Claim 1 or 2,
**characterized in that** the three-dimensional digital model (22) of the actual position of the teeth according to step a) is created by three-dimensional scanning of the teeth, for example by means of a handheld scanner.

5. Method according to any one of Claims 1 to 4,
**characterized in that** undercut regions (40) are filled out digitally on the digital model of the actual position of the teeth or on the digital overall model before step d) in time.

6. Method according to any one of Claims 1 to 5,
**characterized in that** in step f) the components (14, 16, 18, 20) of the removable dental appliance (10) are connected to each other by embedding anchoring sections (14a, 16a, 18a, 20a) of the components (14, 16, 18, 20) provided for this purpose in plastic.

7. Method according to Claim 6,
**characterized in that** step f comprises the following sub-steps:
f1) providing a three-dimensional digital model of a cover (32) to form a cavity (34) into which the anchoring sections (14a, 16a, 8a, 20a) of the components (14, 16, 18, 20) protrude,
f2) preparing a three-dimensional real model of the cover (32),
f3) fitting the real model of the cover (32) on the real model (30) of the actual position of the teeth,
f4) filling the cavity (34) remaining between the real model (30) the actual position of the teeth and the real model of the cover (32) with plastic, and
f5) allowing the plastic to cure.

8. Method according to Claim 7,
**characterized in that** the cover (32) is designed as a single part or multiple parts.

9. Method according to Claim 7 or 8,
**characterized in that** the opening for filling with plastic is created in the real model of the cover (32) or the real model (30) of the actual position of the teeth.

10. Method according to Claim 6,
**characterized in that** step f comprises the following sub-steps:
f1') providing a three-dimensional digital model of a cover (32) to form a cavity (34) into which the anchoring sections (14a, 16a, 8a, 20a) of the components (14, 16, 18, 20) protrude,
f2') preparing a three-dimensional real model of the cover (32),
f3') spreading plastic onto the real model (30) of the actual position of the teeth,
f4') fitting the real model of the cover (32) on the real model (30) of the actual position of the teeth, and
f5') allowing the plastic to cure.

11. Method according to any one of Claims 6 to 10,
**characterized in that** the cover (32) has openings, preferably indentations in the edges thereof, which are designed to allow the anchoring sections (14a, 16a, 18a, 20a) of components (14, 16, 18, 20) to pass through.

12. Method according to any one of Claims 6 to 10,
**characterized in that** at least one positioning aid element (36, 38) is provided on the real model of the cover (32) and on the real model (30) of the actual position of the teeth.

13. Method according to any one of Claims 6 to 12,
**characterized in that** the real model (30) of the actual position of the teeth and/or the real model of the cover (32) is coated with a releasing agent before the filling with plastic.

14. Method according to any one of Claims 1 to 5,
**characterized in that** in step f) the components (142, 144, 146) of the removable dental appliance (110) are connected to each other by connecting them together cohesively, for example by soldering, welding or gluing.

15. Method according to any one of Claims 1 to 14,
**characterized in that** the data of the three-dimensional digital model (22) of the actual position of the teeth created in step a) is forwarded to a wire bending machine together with the predefined design plan for the appliance (10; 110) for the production of at least some of the components (14, 16, 18, 20; 142, 144, 146).

16. Method according to any one of Claims 1 to 15,
**characterized in that** at least one of the components and/or the plastic body connecting the components has/have a section which is designed to cooperate with a corresponding further appliance which is associated with the respective other jaw.

## Revendications

1. Procédé de fabrication d'un appareil dentaire extractible (10 ; 110) comprenant une pluralité de composants (14, 16, 18, 20 ; 142, 144, 146), lequel est déterminé pour avoir un effet de maintien ou de modification sur la position des dents d'un patient, sur la base d'un plan de conception prédéfini pour l'appareil, le procédé comprenant les étapes de :
a) réalisation d'un modèle tridimensionnel numérique (22) de la position réelle des dents d'une mâchoire,
b) prévision de modèles tridimensionnels numériques des éléments de maintien (24, 124) pour au moins une partie des composants de l'appareil (10 ; 110),
c) réunion des données numériques des modèles tridimensionnels des éléments de maintien (24, 124) avec les données numériques du modèle tridimensionnel numérique (22) de la position réelle des dents pour obtenir un modèle général commun tridimensionnel numérique (26, 126),
d) fabrication d'un modèle réel tridimensionnel numérique (30 ; 130) de la position réelle des dents sur la base du modèle général tridimensionnel numérique (26, 126),
e) montage des composants (14, 16, 18, 20 ; 142, 144, 146) de l'appareil dentaire extractible (10 ; 110) sur le modèle réel (30 ; 130) en s'aidant des éléments de maintien (24 ; 124) formés lors de la fabrication du modèle réel (30 ; 130),
f) liaison des composants (14, 16, 18, 20 ; 142, 144, 146) à l'appareil dentaire extractible (10 ; 110),
g) enlèvement de l'appareil dentaire extractible (10 ; 110) ainsi fabriqué du modèle réel.

2. Procédé selon la revendication 1,
**caractérisé en ce qu'**au moins un élément de maintien (24 ; 124) est un élément de maintien actif et/ou **en ce qu'**au moins un élément de maintien est un élément de maintien passif.

3. Procédé selon la revendication 1 ou 2,
**caractérisé en ce que** le modèle tridimensionnel numérique (22) de la position réelle des dents selon l'étape a) est établi du fait que l'on réalise dans une première sous-étape, par exemple par empreinte, un modèle réel négatif de la position réelle des dents, que l'on réalise dans une deuxième sous-étape sur la base de ce modèle réel négatif, par exemple par moulage, un modèle réel positif et que l'on réalise dans une troisième sous-étape par numérisation tridimensionnelle de ce modèle réel positif le modèle tridimensionnel numérique de la position réelle des dents.

4. Procédé selon la revendication 1 ou 2,
**caractérisé en ce que** le modèle tridimensionnel numérique (22) de la position réelle des dents selon l'étape a) est réalisé par numérisation tridimensionnelle des dents, par exemple au moyen d'un numériseur portable.

5. Procédé selon l'une quelconque des revendications 1 à 4,
**caractérisé en ce que** préalablement à l'étape d) les zones découpées en arrière (40) sont remplies de façon numérique sur le modèle numérique de la position réelle des dents ou sur le modèle général numérique.

6. Procédé selon l'une quelconque des revendications 1 à 5,
**caractérisé en ce que** l'on relie entre eux les composants (14, 16, 18, 20) de l'appareil dentaire extractible (10) dans l'étape f), du fait que l'on intègre pour cela dans la matière plastique les sections d'ancrage (14a, 16a, 18a, 20a) prévues des composants (14, 16, 18, 20).

7. Procédé selon la revendication 6,
**caractérisé en ce que** l'étape f) comprend les sous-étapes suivantes :
f1) prévision d'un modèle tridimensionnel numérique d'une couverture (32) pour la formation d'un espace creux (34) dans lequel pénètrent des sections d'ancrage (14a, 16a, 18a, 20a) des composants (14, 16, 18, 20),
f2) fabrication d'un modèle réel tridimensionnel de la couverture (32),
f3) pose du modèle réel de couverture (32) sur le modèle réel (30) de la position réelle des dents,
f4) remplissage avec de la matière plastique de l'espace creux (34) restant entre le modèle réel (30) de la position réelle des dents et le modèle réel de la couverture (32), et
f5) durée de durcissement de la matière plastique.

8. Procédé selon la revendication 7,
**caractérisé en ce que** la couverture (32) est constituée en une ou plusieurs parties.

9. Procédé selon la revendication 7 ou 8,
**caractérisé en ce que** l'ouverture destinée au remplissage de la matière plastique est aménagée dans le modèle réel de la couverture (32) ou le modèle réel (30) de la position réelle des dents.

10. Procédé selon la revendication 6,
**caractérisé en ce que** l'étape f) comprend les sous-étapes suivantes :
f1') prévision d'un modèle tridimensionnel numérique d'une couverture (32) pour la formation d'un espace creux (34) dans lequel pénètrent les sections d'ancrage (14a, 16a, 18a, 20a) des composants (14, 16, 18, 20),
f2') fabrication d'un modèle réel tridimensionnel de la couverture (32),
f3') application de matière plastique sur le modèle réel (30) de la position réelle des dents
f4') pose du modèle réel de couverture (32) sur le modèle réel (30) de la position réelle des dents, et
f5') durée de durcissement de la matière plastique.

11. Procédé selon l'une quelconque des revendications 6 à 10, **caractérisé en ce que**
la couverture (32) comporte des ouvertures, de préférence des encoches marginales, qui sont destinées au passage des sections d'ancrage (14a, 16a, 18a, 20a) des composants (14, 16, 18, 20).

12. Procédé selon l'une quelconque des revendications 6 à 11, **caractérisé en ce qu'**
au moins un élément d'aide au positionnement (36, 38) est prévu sur le modèle réel de la couverture (32) et sur le modèle réel (30) de la position réelle des dents.

13. Procédé selon l'une quelconque des revendications 6 à 12,
**caractérisé en ce que** l'on enduit d'un agent de séparation le modèle réel (30) de la position réelle des dents ou/et le modèle réel de la couverture (32) avant le remplissage de la matière plastique.

14. Procédé selon l'une quelconque des revendications 1 à 5,
**caractérisé en ce que** l'on relie entre eux les composants (142, 144, 146) entre eux de l'appareil dentaire extractible (110) dans l'étape f) en les reliant ensemble par conformité de matière, par exemple en les brasant, les soudant ou les collant.

15. Procédé selon l'une quelconque des revendications 1 à 14, **caractérisé en ce que** les données du modèle tridimensionnel numérique (22), établi dans l'étape a) de la position réelle des dents sont transmises à une machine à plier les fils en même temps que le plan de conception prédéfini pour l'appareil (10 ; 110) pour la fabrication d'au moins une partie des composants (14, 16, 18, 20 ; 142, 144, 146).

16. Procédé selon l'une quelconque des revendications 1 à 15,
**caractérisé en ce qu'**au moins un des composants ou/et des corps en plastique reliant les composants comporte une section pour la coopération d'un autre appareil correspondant, lequel est respectivement attribué à l'autre mâchoire.
